# EUROPEAN PATENT APPLICATION

(11) **EP 1 170 648 A1**
(43) Date of publication of application: **09.01.2002**
(21) Application number: 01303956.5
(22) Date of filing: 30.04.2001
(51) Int. Cl.: G05B 19/4093, G05B 19/4097, B23C 3/18

(54) **Method for machining a workpiece**

(30) Priority: 01.05.2000 US 563043
(71) Applicant: GENERAL ELECTRIC COMPANY, Schenectady, NY 12345 (US)
(72) Inventor: Wells, George Anthony, Hanson, Kentucky 42431 (US)
(74) Representative: Pedder, James Cuthbert

(57) **Abstract**

A method for machining a workpiece (20). The workpiece (20) is modeled to create a numerical model of the workpiece (20). Locations of a plurality of fixture locator points (14) adapted for holding the workpiece (20) in position on the fixture (10) are measured, and a numerical model of these locations is created. The numerical model of the workpiece (20) is merged with the numerical model of the locations of the fixture locator points (14) to create a merged numerical model of the workpiece (20) on the fixture (10). A machining parameter for machining the workpiece (20) is calculated based on the merged numerical model of the workpiece (20) on the fixture (10). The workpiece (20) is mounted on the plurality of fixture locator points (14), and the workpiece (20) is machined according to the calculated machining parameters.

## Description

The present invention relates generally to machining workpieces and more particularly to a method of machining workpieces using non-precision fixtures.

Engineering drawings specify toleranced dimensions for various features of finished workpieces. These dimensions frequently are related to points on the workpiece known as datums. In order to meet the specified dimensions, workpieces are held in fixtures during machining. Typically, one of two types of strategies is used when designing fixtures and developing machining processes so the finished workpieces meet the specified drawing dimensions.

Using one of these strategies, the workpiece is rigidly held in a fixture as the datums and other features of the workpiece are machined. Because the datums and other features are machined without removing the workpiece from the fixture, the features are machined relative to the datums within the accuracy of the machine. However, many workpieces cannot be machined using this strategy because all the features of the workpiece cannot be machined without moving the workpiece in the fixture to expose various portions of the workpiece. Once the workpiece is moved, the relation between the machine and the datums is disrupted and dimensional accuracy is lost.

Using the other previously mentioned strategy, the datums are machined in the workpiece first, and then the workpiece is positioned in a fixture having locator points which engage the workpiece datums to hold the workpiece in a known location and orientation during machining. In order to accurately machine the workpiece using this strategy, it is essential that the locator points be precisely positioned relative to the machine. To ensure the points are precisely positioned, the fixture must be precisely manufactured so the positional tolerance of the locator points is a fraction of the permissible dimensional tolerances of the finished workpiece. Further, the fixture must be periodically inspected to ensure the locator points are correctly positioned. The small positional tolerances and the need for periodic inspection increase the cost of making and maintaining this type of fixture thereby increasing the cost of machining workpieces using this strategy.

Among the several features of the present invention may be noted the provision of a method for machining a workpiece. The workpiece is modeled to create a numerical model of the workpiece. Locations of a plurality of fixture locator points adapted for holding the workpiece in position on the fixture are measured, and a numerical model of these locations is created. The numerical model of the workpiece is merged with the numerical model of the locations of the fixture locator points to create a merged numerical model of the workpiece on the fixture. A machining parameter for machining the workpiece is calculated based on the merged numerical model of the workpiece on the fixture. The workpiece is mounted on the plurality of fixture locator points, and the workpiece is machined according to the calculated machining parameters.

The invention will now be described in greater detail, by way of example, with reference to the drawings, in which:-
Fig. 1 is a perspective of a fixture used to perform a method of the present invention; and
Fig. 2 is a perspective of the fixture having a workpiece loaded therein.

Corresponding reference characters indicate corresponding parts throughout the several views of the drawings.

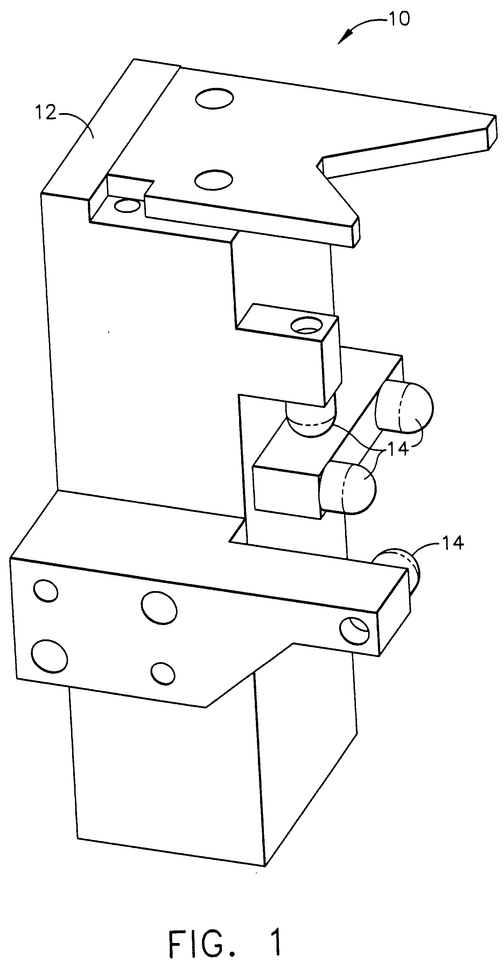

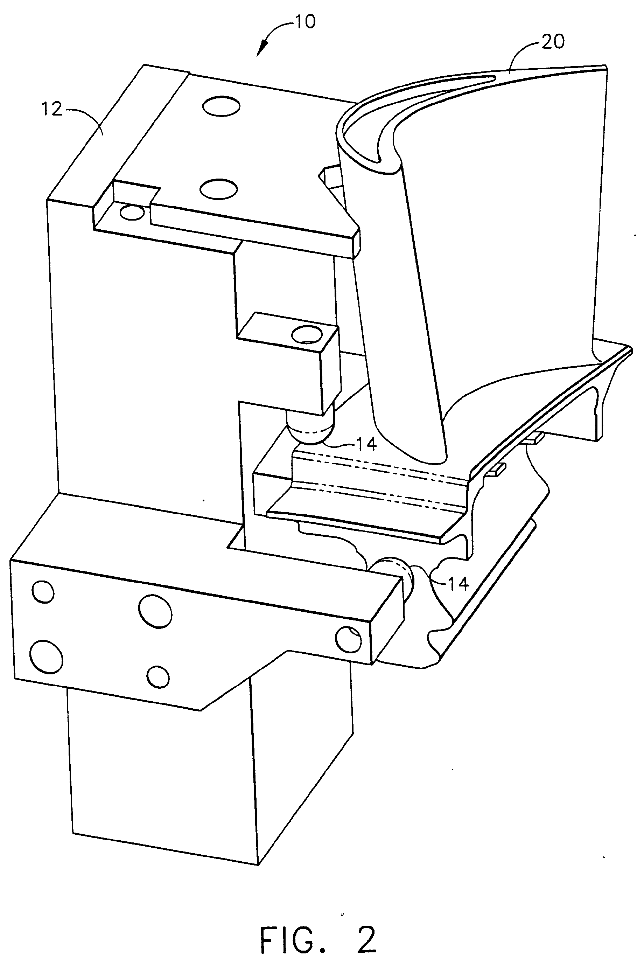

Referring now to the drawings and in particular to Fig. 1, a fixture used in performing a method of the present invention is designated in its entirety by the reference number 10. The fixture 10 includes a body 12 which is mounted on a machine (not shown), such as a computer numerically controlled milling machine. The fixture 10 has a plurality of contact or locator points 14 adapted to contact datum points of a workpiece 20 (Fig. 2). As will be explained in further detail below, the positions of the locator points are measured so they are known precisely. However, even though the precise positions of these locator points 14 are known, they need not be precisely specified. Rather, the positions of the locator points 14 can vary widely so long as they contact the datum points on the workpiece 20. Thus, the positional tolerances of the locator points 14 can be several times larger than the dimensional tolerances of the workpiece 20. Other aspects and features of the fixture 10 are conventional and will not be described in further detail.

As illustrated in Fig. 2, the workpiece 20 (e.g., a gas turbine engine airfoil) is loaded into the fixture 10 so the datum points (not shown) of the workpiece rest against the locator points 14 of the fixture. Once in position, the workpiece 20 is clamped to the fixture 10 to firmly hold the workpiece in position on the machine.

Using a method of the present invention, the workpiece 20 is numerically modeled using a conventional computer program to create a numerical model of the workpiece. Any conventional numerical modeling program may be used to create the numerical model provided it has solid modeling, merging, translating and rotating capabilities. Although features of an actual workpiece may be modeled without departing from the scope of the present invention, in one preferred embodiment a nominal workpiece is modeled from the engineering drawings. Alternatively, before a workpiece is machined, it can be numerically modeled to take into account dimensional variations of the particular workpiece.

With the fixture 10 in position, the locations of fixture locator points 14 are precisely measured using a conventional measurement machine such as a coordinate measuring machine. A numerical model of the locations of the fixture locator points 14 is made using the aforesaid conventional computer program, and the models of the fixture 10 and workpiece 20 are merged using the program to create a merged numerical model of the workpiece on the fixture. As will be understood by those skilled in the art, machining parameters for machining the workpiece may be calculated from the merged numerical model of the workpiece on the fixture. Because complicated translations and rotations of the merged model can be accomplished quickly and effortlessly using conventional numerical techniques and high speed computers, the workpieces 20 may be precisely machined using the measured non-precision fixture 10.
Once the machining parameters are calculated, the workpiece 20 is mounted on the locator points 14 of the fixture 10 in a conventional manner and the workpiece is machined using the calculated machining parameters.

The locations of the fixture locator points 14 are periodically re-measured (e.g., after discrepant workpieces 20 are discovered) using the conventional measurement machine, and the models are updated to reflect changes in the locator point positions. Further, as previously mentioned, the particular workpiece being machined can be measured and the numerical model of the workpiece can be adjusted according to the measured dimensions of the particular workpiece prior to calculating the machining parameter for machining the workpiece. Using this procedure, additional dimensional accuracy may be achieved when required.

In operation, a computer such as a Model B-160 Hewlitt-Packard workstation is used to run the computer programs for creating the numerical models of the fixture locator points and the workpiece and for merging the numerical models. This computer may also be used to calculate the machining parameters for machining the workpiece. Thus, the computer accepts input from the measurement machine and outputs the machining parameters directly to the machine used to machine the workpiece.

When introducing elements of the present invention or the preferred embodiment(s) thereof, the articles "a", "an", "the" and "said" are intended to mean that there are one or more of the elements. The terms "comprising", "including" and "having" are intended to be inclusive and mean that there may be additional elements other than the listed elements.

## Claims

1. A method of machining a workpiece (20) comprising the steps of:
numerically modeling the workpiece (20) to create a numerical model of the workpiece (20);
measuring locations of a plurality of fixture locator points (14) adapted for holding the workpiece (20) in position on the fixture (10);
creating a numerical model of the locations of the fixture locator points (14);
merging the numerical model of the workpiece (20) with the numerical model of the locations of the fixture locator points (14) to create a merged numerical model of the workpiece (20) on the fixture (10);
calculating a machining parameter for machining the workpiece (20) based on the merged numerical model of the workpiece (20) on the fixture (10);
mounting the workpiece (20) on the plurality of fixture locator points (14); and
machining the workpiece (20) positioned on said plurality of locator points (14) according to the calculated machining parameters.

2. A method as set forth in claim 1 wherein the numerical model of the workpiece (20) is a model of a nominally dimensioned workpiece (20).

3. A method as set forth in claim 1 or 2 further comprising the steps of:
measuring dimensions of the workpiece (20); and
adjusting the numerical model of the workpiece (20) according to the measured dimensions of the workpiece (20) prior to calculating the machining parameter for machining the workpiece (20).
